# EUROPEAN PATENT APPLICATION

(11) **EP 3 654 626 A1**
(43) Date of publication of application: **20.05.2020**
(21) Application number: 18206489.9
(22) Date of filing: 15.11.2018
(51) Int. Cl.: H04M 3/00, H04M 3/30, H04L 12/26, H04B 1/58, H04B 3/00, H04M 3/22, H04Q 11/04

(54) **REALIZATION OF METALLIC LINE TESTING (MELT) IN SCENARIOS UTILIZING REMOTE POWER FEEDING VIA TWISTED PAIR COPPER LINES (RPF)**

(71) Applicant: Nokia Solutions and Networks Oy, 02610 Espoo (FI)
(72) Inventor: MOESEN, Kristof, 2018 Antwerpen (BE); HOVINE, Charles, 2018 Antwerpen (BE)
(74) Representative: TBK

(57) **Abstract**

There are provided measures for realization of metallic line testing in scenarios utilizing remote power feeding via twisted pair copper lines. Such measures exemplarily comprise provision of a diplexer apparatus combining a lower frequency component path and a higher frequency component path to a compound path, the diplexer apparatus comprising said lower frequency component path configured to pass remote power feeding via twisted pair copper lines, said higher frequency component path, a first frequency selective filter circuitry electrically connecting said lower frequency component path to said compound path, a second frequency selective filter circuitry electrically connecting said higher frequency component path to said compound path, a detection circuitry configured to detect metallic line testing activity on said higher frequency component path, and a control circuitry configured to control, if said metallic line testing activity on said higher frequency component path is detected, electrically disconnecting said lower frequency component path from said compound path and establishing an electric connection from said higher frequency component path to said compound path bypassing said second frequency selective filter circuitry.

## Description

### Field

The present invention relates to realization of metallic line testing in scenarios utilizing remote power feeding via twisted pair copper lines (RPF). More specifically, the present invention exemplarily relates to measures (including methods, apparatuses and computer program products) for realizing realization of metallic line testing in scenarios utilizing remote power feeding via twisted pair copper lines.

### Background

The present specification generally relates to implementation of metallic line testing in scenarios which generally inhibit the same.

Namely, a remotely deployed digital subscriber line (DSL) system can be remotely powered by means of remote power feeding via twisted pair copper lines (RPF) which may be implemented as remote feeding telecommunication - current (RFT-C) or as remote feeding telecommunication - voltage (RFT-V). RFT-C is a power supply system that provides e.g. 350V on e.g. eight lines, each line carrying e.g. 60mA (in other words, current is limited to 60mA, voltage is 350V (differential) or 175V against ground). In RFT-V, the voltage is limited to 200V against ground. RFT-C/V uses DC. DSL uses frequencies from 32kHz up to 212kHz.

When combining RFT-C/V with plain old telephone service (POTS, using the base band up to 4kHz) over DSL on the same twisted pair or with DSL on the same twisted pair, a diplexer is needed.

Such diplexer may consist of a low pass filter (LPF) and a high pass filter (HPF). The low pass filter eliminates any high frequency disturbers on the RFT-C/V supply voltage and presents a high output impedance towards the DSL service. The high pass filter mainly acts as a DC blocking device towards the POTS and MELT service. The high pass filter blocks the DC voltage between the public switched telephone network (PSTN) in the central office (CO) and the RFT-C supply. On top of that the safety regulations ask for a safe low voltage access point on the DSL interface of the power diplexer.

On the other hand, the diplexer high pass filter functions act as a distributed high pass filter and it must be matched with the already residing high pass filter on the DSL line termination boards.

A problem occurs when on top of RFT-C/V with the DSL service metallic line testing (MELT) is deployed. MELT uses baseband frequencies from DC to 4kHz.

For RFT-C/V it is crucial that the quality of the copper lines is monitored. Due to the RFT-C/V's high working voltage (being 350V) no leakage between the copper pairs (or between tip and ring of one copper pair) is allowed. MELT uses baseband signals to determine the quality of the copper lines. However, the presence of the distributed high pass filter inhibits of doing these MELT measurements. Namely, as mentioned above, MELT uses baseband frequencies from DC to 4kHz, while the high pass filter acts as a DC blocking device towards the POTS service and blocks the DC voltage between the public switched telephone network (PSTN) in the central office and the RFT-C/V supply.

Thus, if MELT signaling was applied to the DSL lines, this would not pass the high pass filters of the diplexer necessary for allowing RFT-C/V.

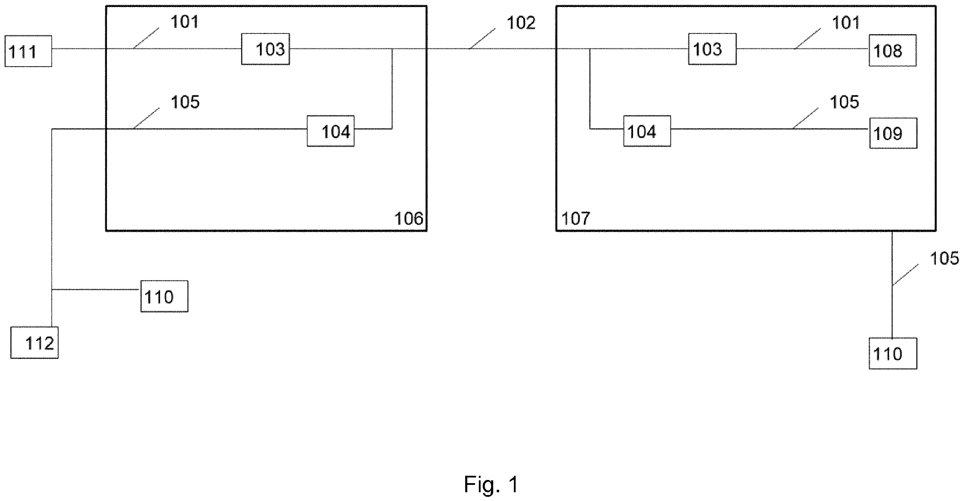

Figure 1 shows an example of a system environment providing MELT and RFT-C/V without implementation of the present invention.

In the example shown in Figure 1, a splitter (power diplexer) 106 is connected to an RFT-C up-converter 111 (via copper pairs (101) carrying RFT-C power only) and to an xDSL CO modem 112 (via copper pairs (105) carrying xDSL signals only).

Particularly, the copper pairs 101 are connected to a low-pass filter 103 of the splitter 106, and the copper pairs 105 are connected to a high-pass filter 104 of the splitter 106.

Via copper pairs (102) carrying RFT-C power and xDSL signals, the splitter 106 is connected to a remote DSL system 107, where the components are separated via low-pass filter 103 of remote DSL system 107 and high-pass filter 104 of the remote DSL system 107 and passed to an RFT-C down-converter 108, and an xDSL modem 109, respectively.

The xDSL signals are transposed by the xDSL modem 109 and passed from between the remoted DSL system 107 and an xDSL CPE 110.

Incidentally, the copper pairs (105) carrying xDSL signals only are connected to another xDSL CPE 110.

The copper pairs (105) carrying xDSL signals (connected to the xDSL CO modem 112) may be fed with with xDSL and POTS. In addition, copper pairs (105) carrying xDSL signals (connected to the xDSL CO modem 112) may be fed with MELT from a PSTN or MELT from a central office LT board, if required. According to a more specific example of the scenario illustrated in Figure 1, an exemplary 48 pairs DSL line (from the xDSL CO modem 112) may be separated into e.g. eight pairs and 40 pairs.

The 48 pairs DSL line (from the xDSL CO modem 112) may be fed with xDSL and POTS. In addition, the 48 pairs DSL line may be fed with MELT from the PSTN or MELT from a central office LT board, if required.

The 40 pairs (copper pairs (105) carrying xDSL signals) may be directly connected to customer premises equipment (CPE), i.e., another xDSL CPE 110.

The eight pairs may be connected to a power diplexer (i.e. splitter (power diplexer) 106). The power diplexer may couple the eight pairs DSL line with RFT-C/V via a network of a low pass filter (LPF 103) and a high pass filter (HPF 104). The powered eight pairs may then be connected to a sealed expansion module (SEM), e.g. remote DSL system 107, to provide power to the SEM and carry the bonded data of 48 pairs DSL lines in upstream (i.e. from xDSL CPEs 110) and bonded data of eight pairs coming from the CO LT in downstream towards 48 users, i.e., towards customer premises equipments (CPE) 110.

In such scenario, since the HPF of the power diplexer does not let pass MELT signaling using baseband frequencies from DC to 4kHz, MELT is not available on the powered eight (exemplary) pairs DSL line.

MELT is only available on the unpowered 40 (exemplary) pairs DSL line.

Hence, according to present techniques, the implementation of RFT-C/V excludes the implementation of MELT on the same line and vice versa. Incidentally, according to present techniques, the implementation of POTS on the RFT-C/V lines is excluded as well; this is needed to remove the POTS DC line feeding voltage which can range from -48V (or even -36V) to -70V depending on the battery voltage of the PSTN CO.

Hence, the problem arises that measures are needed allowing the application of RPF (i.e., RFT-C/V) and MELT on the same line.

Hence, there is a need to provide for realization of metallic line testing in scenarios utilizing remote power feeding via twisted pair copper lines (RPF). While details of the present invention are described in a scenario with a POTS service being present in the bonded RFT-C/V pairs going to the SEM and not directly to the DSL CPE's and telephone sets, presence of the POTS service is not necessary for achieving the advantages according to the present invention.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a diplexer apparatus combining a lower frequency component path and a higher frequency component path to a compound path, the diplexer apparatus comprising said lower frequency component path configured to pass remote power feeding via twisted pair copper lines, said higher frequency component path, a first frequency selective filter circuitry electrically connecting said lower frequency component path to said compound path, a second frequency selective filter circuitry electrically connecting said higher frequency component path to said compound path, a detection circuitry configured to detect metallic line testing activity on said higher frequency component path, and a control circuitry configured to control, if said metallic line testing activity on said higher frequency component path is detected, electrically disconnecting said lower frequency component path from said compound path and establishing an electric connection from said higher frequency component path to said compound path bypassing said second frequency selective filter circuitry.

According to an exemplary aspect of the present invention, there is provided a method of operating a diplexer apparatus combining a lower frequency component path and a higher frequency component path to a compound path, the diplexer apparatus comprising said lower frequency component path configured to pass remote power feeding via twisted pair copper lines, said higher frequency component path, a first frequency selective filter circuitry electrically connecting said lower frequency component path to said compound path, a second frequency selective filter circuitry electrically connecting said higher frequency component path to said compound path, a detection circuitry, and a control circuitry, the method comprising detecting, utilizing said detection circuitry, metallic line testing activity on said higher frequency component path, and controlling, utilizing said control circuitry, if said metallic line testing activity on said higher frequency component path is detected, to electrically disconnect said lower frequency component path from said compound path, and to establish an electric connection from said higher frequency component path to said compound path bypassing said second frequency selective filter circuitry.

According to an exemplary aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention. Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient application of metallic line testing irrespective of whether remote power feeding via twisted pair copper lines is utilized to thereby solve at least part of the problems and drawbacks identified in relation to the prior art.

By way of exemplary embodiments of the present invention, there is provided realization of metallic line testing in scenarios utilizing remote power feeding via twisted pair copper lines. More specifically, by way of exemplary embodiments of the present invention, there are provided measures and mechanisms for realizing realization of metallic line testing in scenarios utilizing remote power feeding via twisted pair copper lines.

Thus, improvement is achieved by methods, apparatuses and computer program products enabling/realizing realization of metallic line testing (MELT) in scenarios utilizing remote power feeding via twisted pair copper lines (RPF).

While thus according to the present invention, generally, MELT access is provided to the RFT-C/V lines (RPF lines), this access can be obtained by any MELT device. Since the switches utilized to implement the above concept can be driven by the MELT signals, the present invention is compatible with different suppliers.

In particular, according to exemplary embodiments of the present invention, the search tone implementation of the MELT chip may be used. The search tone is a specific standardized audible tone that is used by technical staff at CPE side to find and connect the right twisted pair. Thus, there is no need for an external additional communication channel between the power diplexer and the MELT chip/board. There is even no impact on software to implement the power diplexer because it is triggered with the MELT signal itself.

### Brief description of the drawings

In the following, the present invention will be described in greater detail by way of non-limiting examples with reference to the accompanying drawings, in which
Figure 1 is a schematic diagram showing an example of a system environment providing MELT and RFT-C/V without implementation of the present invention,
Figure 2 is a schematic diagram showing the power diplexer of Figure 1 in more details,
Figure 3 is a block diagram illustrating an apparatus according to exemplary embodiments of the present invention,
Figure 4 is a block diagram illustrating an apparatus according to exemplary embodiments of the present invention,
Figure 5 is a schematic diagram of a procedure according to exemplary embodiments of the present invention,
Figure 6 is a block diagram illustrating two states of an apparatus according to exemplary embodiments of the present invention,
Figure 7 is a block diagram illustrating a first state of an apparatus according to exemplary embodiments of the present invention,
Figure 8 is a block diagram illustrating a second state of the apparatus illustrated in Figure 7,
Figure 9 is a block diagram illustrating two states of an apparatus according to exemplary embodiments of the present invention,
Figure 10 is a block diagram illustrating a first state of an apparatus according to exemplary embodiments of the present invention,
Figure 11 is a block diagram illustrating a second state of the apparatus illustrated in Figure 10,
Figure 12 is a block diagram illustrating two states of an apparatus according to exemplary embodiments of the present invention,
Figure 13 is a block diagram alternatively illustrating an apparatus according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) realization of metallic line testing in scenarios utilizing remote power feeding via twisted pair copper lines.

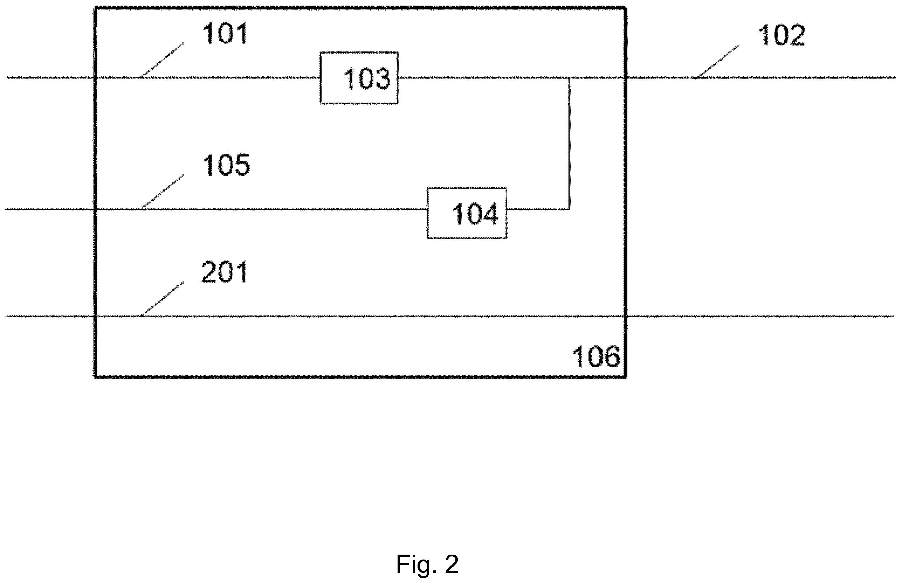

Figure 2 is a schematic diagram showing the power diplexer 106 of Figure 1 in more details.

In particular, according to Figure 2, a splitter 106 comprises n copper pairs (101) carrying RFT-C power only and connected to low-pass filter 103, n copper pairs (105) carrying xDSL signals only and connected to high-pass filter 104, and n copper pairs (102) carrying RFT-C power and xDSL signals to remote DSL system.

In Figure 2, it is assumed that the the xDSL CO modem 112 of Figure 1 originates m copper pairs carrying xDSL signals.

Contrary to the illustration of Figure 1, the remaining m-n copper pairs (201) carrying xDSL signals directly towards CPEs (xDSL CPEs 110) are fed through the splitter/power diplexer 106 illustrated in Figure 2.

These two implementation examples are interchangeable, and the embodiments of the present invention described below are implementable in any of these two ways.

As discussed below, as the n pairs DSL line is fed through the high pass filter (HPF 104) of the power diplexer in order to enable RFT-C/V, MELT is not possible on the powered n pairs DSL line 102 of Figure 2.

In other words, the quality of the bonded up-link in relation to the powered n pairs DSL line 102 cannot be monitored by MELT according to the arrangement shown in Figure 2.

Thus, according to exemplary embodiments of the present invention, measures are provided to realize the utilization of MELT in RPF (i.e., RFT-C/V) scenarios, in particular when POTS, RFT-C/V, MELT, and DSL are deployed over copper.

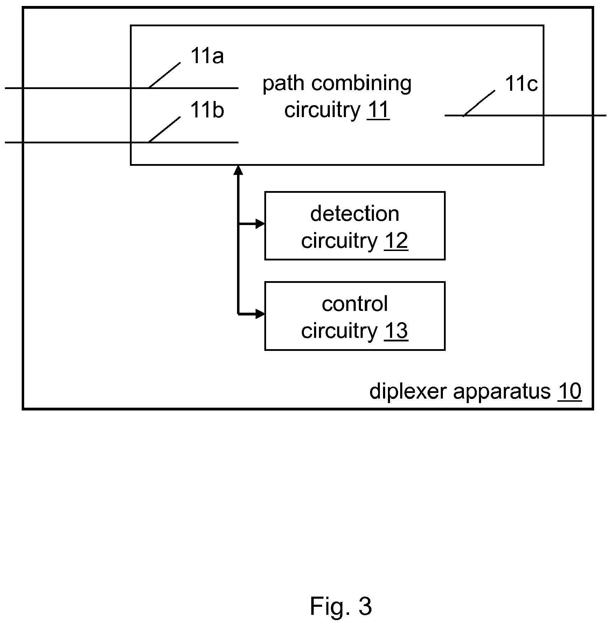

Figure 3 is a block diagram illustrating an apparatus according to exemplary embodiments of the present invention. The apparatus may be a diplexer apparatus 10 such as a power diplexer combining a lower frequency component path 11a and a higher frequency component path 11b to a compound path 11c. The apparatus 10 comprises a path combining circuitry 11, a detection circuitry 12, and a control circuitry 13.

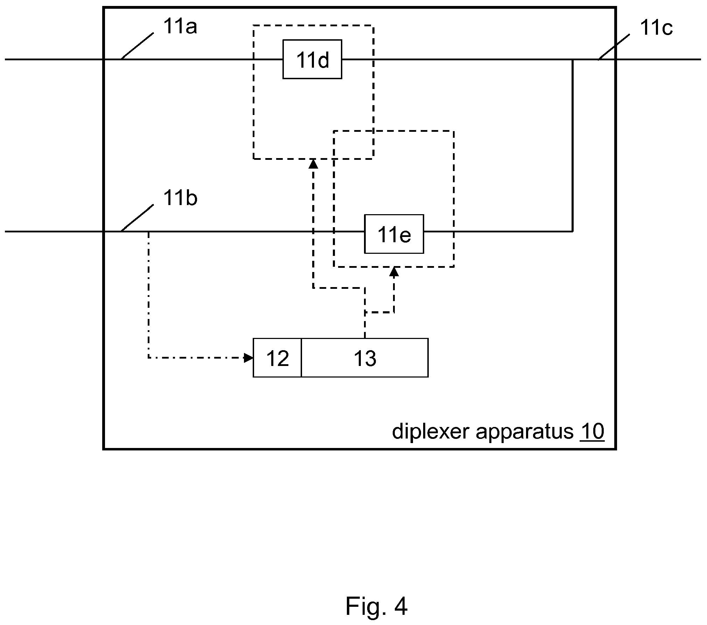

Figure 4 is a block diagram illustrating the diplexer apparatus 10 according to exemplary embodiments of the present invention in more detail.

The diplexer apparatus 10 comprises the lower frequency component path 11a, the higher frequency component path 11b, a first frequency selective filter circuitry 11d, a second frequency selective filter circuitry 11e, the detection circuitry 12, and the control circuitry 13. The lower frequency component path 11a passes remote power feeding via twisted pair copper lines. The first frequency selective filter circuitry 11d electrically connects said lower frequency component path 11a to said compound path 11c. The second frequency selective filter circuitry 11e electrically connects said higher frequency component path 11b to said compound path 11c. The detection circuitry 12 detects metallic line testing activity on said higher frequency component path 11b. The control circuitry 13 controls, if said metallic line testing activity on said higher frequency component path 11b is detected, electrically disconnecting said lower frequency component path 11a from said compound path 11c and establishing an electric connection from said higher frequency component path 11b to said compound path 11c bypassing said second frequency selective filter circuitry 11e.

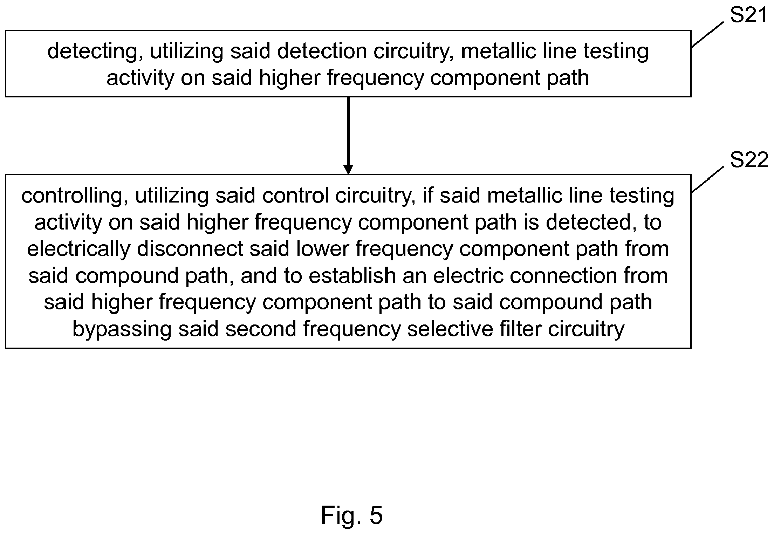

Figure 5 is a schematic diagram of a procedure according to exemplary embodiments of the present invention. The apparatus according to Figure 3 or 4 may perform the method of Figure 5 but is not limited to this method. The method of Figure 5 may be performed by the apparatus of Figure 3 or 4 but is not limited to being performed by this apparatus.

As shown in Figure 5, a procedure according to exemplary embodiments of the present invention comprises an operation of detecting (S21), utilizing said detection circuitry 12, metallic line testing activity on said higher frequency component path 11b, and an operation of controlling (S22), utilizing said control circuitry 13, if said metallic line testing activity on said higher frequency component path 11b is detected, to electrically disconnect said lower frequency component path 11a from said compound path 11c, and to establish an electric connection from said higher frequency component path 11b to said compound path 11c bypassing said second frequency selective filter circuitry 11e.

In an embodiment at least some of the functionalities of the apparatus shown in Figure 3 or 4 may be shared between two physically separate devices forming one operational entity. Therefore, the apparatus may be seen to depict the operational entity comprising one or more physically separate devices for executing at least some of the described processes.

That is, in order to solve the issue of the MELT being blocked by the high pass filter discussed with reference to Figures 1 and 2 above, according to exemplary embodiments of the present invention, an intelligent diplexer apparatus (intelligent power diplexer) is provided.

With the diplexer apparatus according to exemplary embodiments of the present invention, whenever a MELT measurement must be performed, the MELT recognition circuit (as an example of the detection circuitry 12) of the RFT-C/V diplexer listens to the baseband (MELT) activity on the line, and when it recognizes MELT activity at that moment, the lower frequency component path 11a is electrically disconnected from the compound path 11c, while the second frequency selective filter circuitry is bypassed by an established electric connection from the higher frequency component path 11b to the compound path 11c.

In other words, the diplexer apparatus 10 according to exemplary embodiments of the present invention may switch between two states, namely a first state (i.e. RPF mode electrically connecting the lower frequency component path 11a via the first frequency selective filter 11d with the compound path 11c and electrically connecting the higher frequency component path 11b via the second frequency selective filter 11e with the compound path 11c), and a second state (i.e. MELT mode electrically disconnecting the lower frequency component path 11a from the compound path 11c and establishing an electrical connection between the higher frequency component path 11b and the compound path 11c bypassing the second frequency selective filter 11e).

That is, according to exemplary embodiments of the present invention, the (power) diplexer apparatus 10 is brought into in MELT mode when the MELT recognition circuit (as an example for the detection circuitry 12) detects MELT activity on one line. Namely, in such case, that one line is switched to bypass mode and the RFT-C/V on the corresponding line is disabled. As soon as the MELT measurement has been carried out the (power) diplexer apparatus returns to the RPF mode for that particular line.

According to exemplary embodiments of the present invention, the number of lines that can be in MELT mode simultaneously depends on the power needed from e.g. the SEM. For instance, if all lines of the diplexer would be in the MELT mode, no power would be provided to e.g. the SEM anymore.

Thus, according to preferred exemplary embodiments of the present invention, there is a redundancy of one out of eight lines that can be out of RFT-C/V power without affecting the power feeding of e.g. the SEM. In other words, according to preferred exemplary embodiments of the present invention, out of eight lines one line can be switched into MELT mode at a time. The present invention is however not limited to this ratio. Contrary thereto, different ratios are conceivable, such as that one line out of four lines (including two lines out of eight lines) or one line out of 16 lines may be switched into MELT mode at a time.

According to exemplary embodiments of the present invention, the diplexer apparatus 10 may further comprise a lower frequency component path switch 11f arranged between said lower frequency component path 11a and said first frequency selective filter circuitry 11d and configured to, in a first switch state, electrically connect said lower frequency component path 11a and said first frequency selective filter circuitry 11d. The control circuitry 13 may be configured to control, if said metallic line testing activity on said higher frequency component path 11b is detected, switching said lower frequency component path switch 11f into a second switch state electrically disconnecting said lower frequency component path 11a from said compound path 11c.

According to exemplary embodiments of the present invention, the lower frequency component path switch 11f is a toggle switch, and the lower frequency component path switch 11f is configured to, in said second switch state, electrically connect said higher frequency component path 11b and said first frequency selective filter circuitry 11d.

When in the present specification the term toggle switch (e.g. double throw switch) is used in order to outline a switch arrangement in which one first terminal may be selectively connected to one of (at least) two second terminals, it is conceivable that such switch arrangement may also be reproduced by (at least) two single throw switches appropriately interconnected.

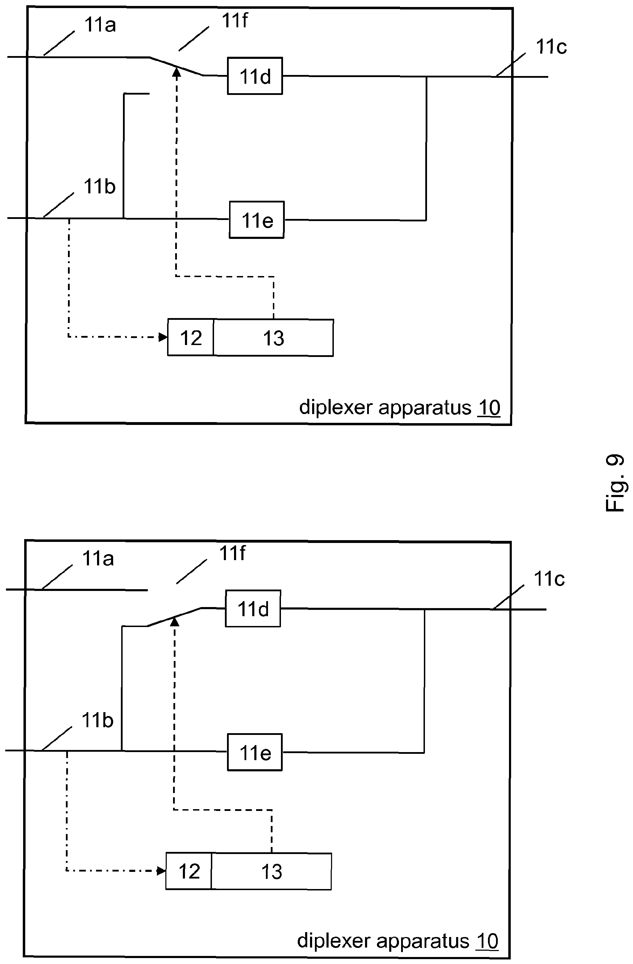

Figure 9 is a block diagram illustrating two states of an apparatus according to exemplary embodiments of the present invention. In particular, Figure 9 illustrates the above-discussed diplexer apparatus 10 having the lower frequency component path switch 11f, wherein in the RPF mode (upper state in Figure 9), the lower frequency component path switch 11f is in the first state, and in the MELT mode (lower state in Figure 9), the lower frequency component path switch 11f is in the second state.

According to exemplary embodiments of the present invention, the lower frequency component path switch 11f may be implemented by a double pole double throw (DPDT) relay with low frequency characteristics.

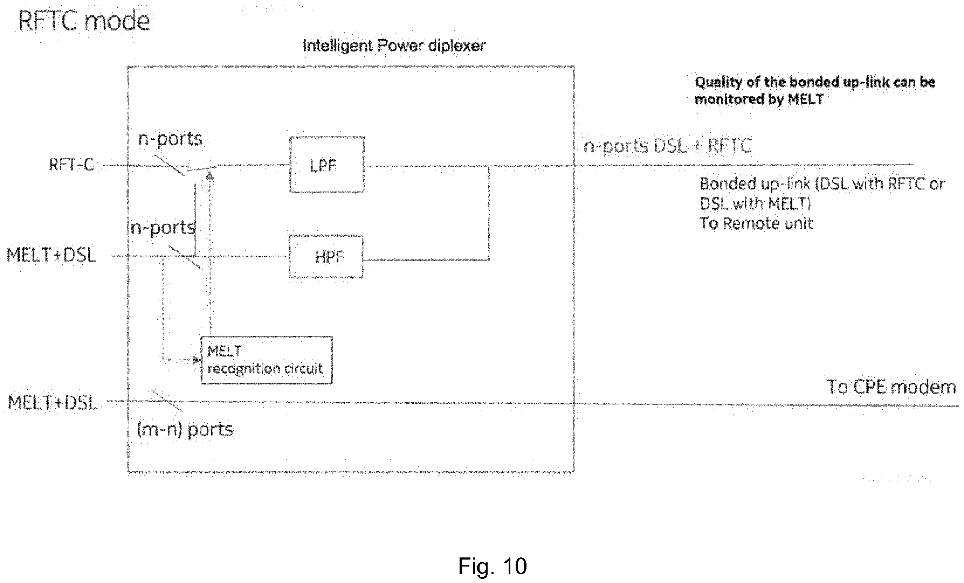

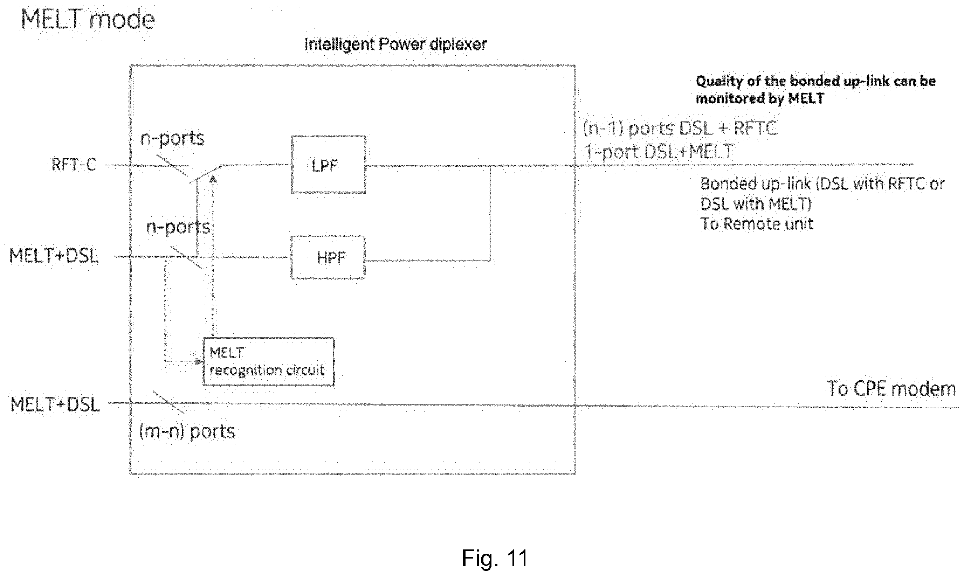

Figure 10 is a block diagram illustrating a first state (RPF mode) of an apparatus according to exemplary embodiments of the present invention, and Figure 11 is a block diagram illustrating a second state (MELT mode) of the apparatus illustrated in Figure 10.

In particular, Figures 10 and 11 illustrate a specific example of the diplexer apparatus 10 illustrated in Figure 9.

In the example shown in Figures 10 and 11, the power diplexer couples the n pairs DSL line with RFT-C/V via a network of a low pass filter (LPF as an example of the first frequency selective filter circuitry) and a high pass filter (HPF as an example of the second frequency selective filter circuitry).

While in the RPF mode shown in Figure 10 the RFT-C/V is connected to the bonded up-link via the LPF and the DSL is connected to the bonded up-link via the HPF, in the MELT mode (upon detection of MELT activity) shown in Figure 11 a toggle switch disconnects the RFT-C/V from the LPF and connects the DSL (including MELT) via the LPF to the bonded up-link, thereby bypassing the HPF. Thus, while the HPF of the power diplexer does not let pass MELT signaling using baseband frequencies from DC to 4kHz, the MELT signaling is nevertheless not filtered out but is rerouted via the LPF.

According to further exemplary embodiments of the present invention, the diplexer apparatus 10 may further comprise a lower frequency component path switch 11g arranged between said first frequency selective filter circuitry 11d and said compound path 11c and configured to, in a first switch state, electrically connect said first frequency selective filter circuitry 11d and said compound path 11c. The control circuitry 13 may be configured to control, if said metallic line testing activity on said higher frequency component path 11b is detected, switching said lower frequency component path switch 11g into a second switch state electrically disconnecting said first frequency selective filter circuitry 11d from said compound path 11c.

According to the further exemplary embodiments of the present invention, the lower frequency component path switch 11g may be a toggle switch, and the lower frequency component path switch 11g may be configured to, in said second switch state, electrically connect said higher frequency component path 11b and said compound path 11c.

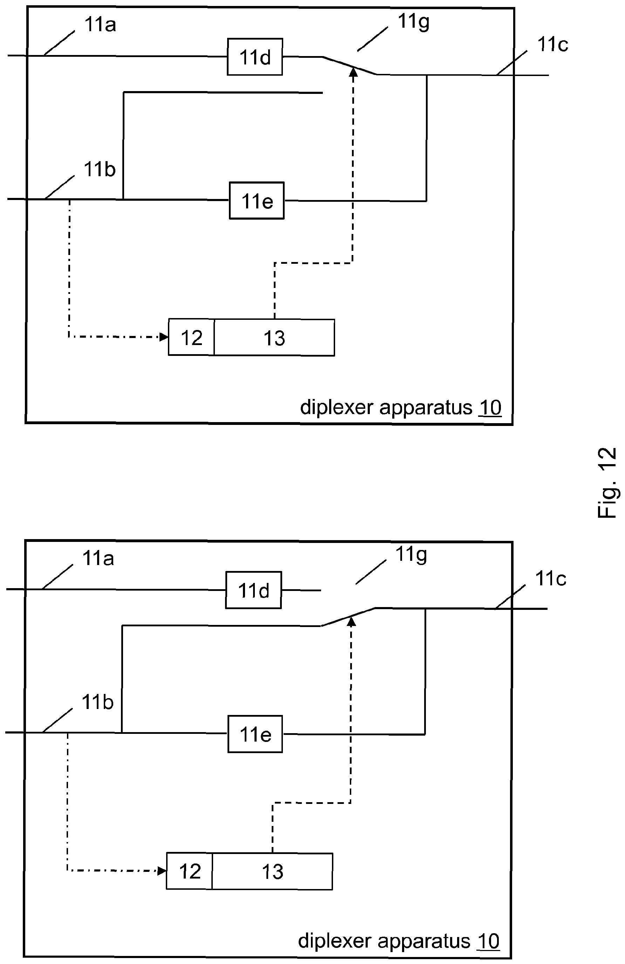

Figure 12 is a block diagram illustrating two states of an apparatus according to exemplary embodiments of the present invention. In particular, Figure 12 illustrates the above-discussed diplexer apparatus 10 having the lower frequency component path switch 11g, wherein in the RPF mode (upper state in Figure 12), the lower frequency component path switch 11g is in the first state, and in the MELT mode (lower state in Figure 12), the lower frequency component path switch 11g is in the second state.

According to exemplary embodiments of the present invention, the lower frequency component path switch 11g may be implemented by a DPDT mono-stable high frequency passing relay.

According to still further exemplary embodiments of the present invention, the diplexer apparatus 10 may further comprise a bypass path 11h, a higher frequency component path toggle switch 11i arranged between said higher frequency component path 11b and said second frequency selective filter circuitry 11e and configured to, in a first switch state, electrically connect said higher frequency component path 11b and said second frequency selective filter circuitry 11e, and in a second switch state, electrically connect said higher frequency component path 11b and said bypass path 11h, and a frequency selective filter circuitry toggle switch 11j arranged between said second frequency selective filter circuitry 11e and said compound path 11c and configured to, in a first switch state, electrically connect said second frequency selective filter circuitry 11e and said compound path 11c, and in a second switch state, electrically connect said bypass path 11h and said compound path 11c. The control circuitry 13 may be configured to control, if said metallic line testing activity on said higher frequency component path 11b is detected, switching said higher frequency component path toggle switch 11i into said second switch state and switching said frequency selective filter circuitry toggle switch 11j into said second switch state.

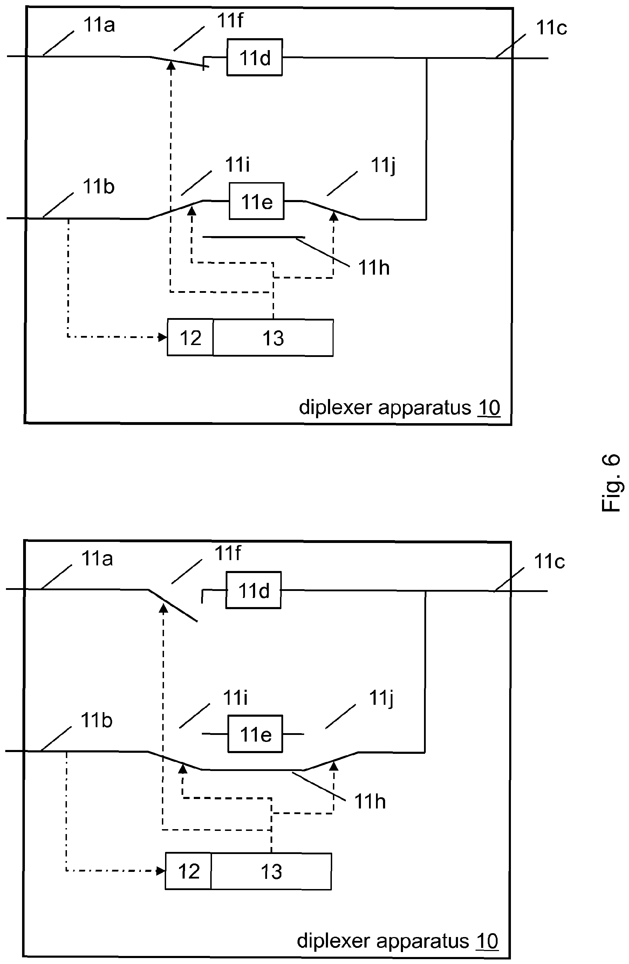

Figure 6 is a block diagram illustrating two states of an apparatus according to exemplary embodiments of the present invention. In particular, Figure 6 illustrates the above-discussed diplexer apparatus 10 having the lower frequency component path switch 11f and/or 11g, the bypass path 11h, the higher frequency component path toggle switch 11i, and the frequency selective filter circuitry toggle switch 11j. In the RPF mode (upper state in Figure 6), the lower frequency component path switch 11f and/or 11g is in the first state, the higher frequency component path toggle switch 11i is in the first state, and the frequency selective filter circuitry toggle switch 11j is in the first state. In the MELT mode (lower state in Figure 6), the lower frequency component path switch 11f and/or 11g is in the second state, the higher frequency component path toggle switch 11i is in the second state, and the frequency selective filter circuitry toggle switch 11j is in the second state.

According to exemplary embodiments of the present invention, the lower frequency component path switch 11f and/or 11g, the higher frequency component path toggle switch 11i, and the frequency selective filter circuitry toggle switch 11j may be implemented by DPDT mono-stable high frequency passing relays.

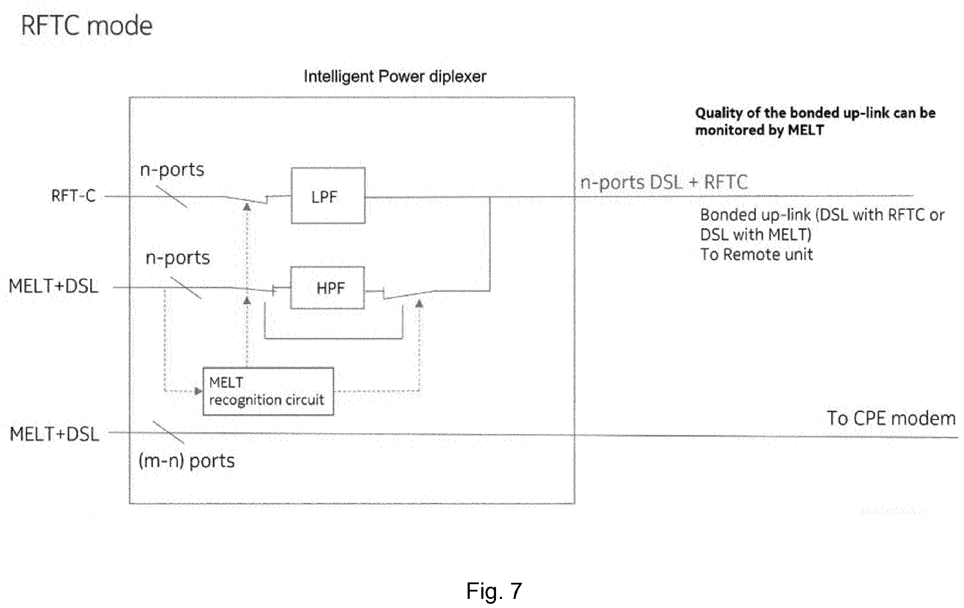

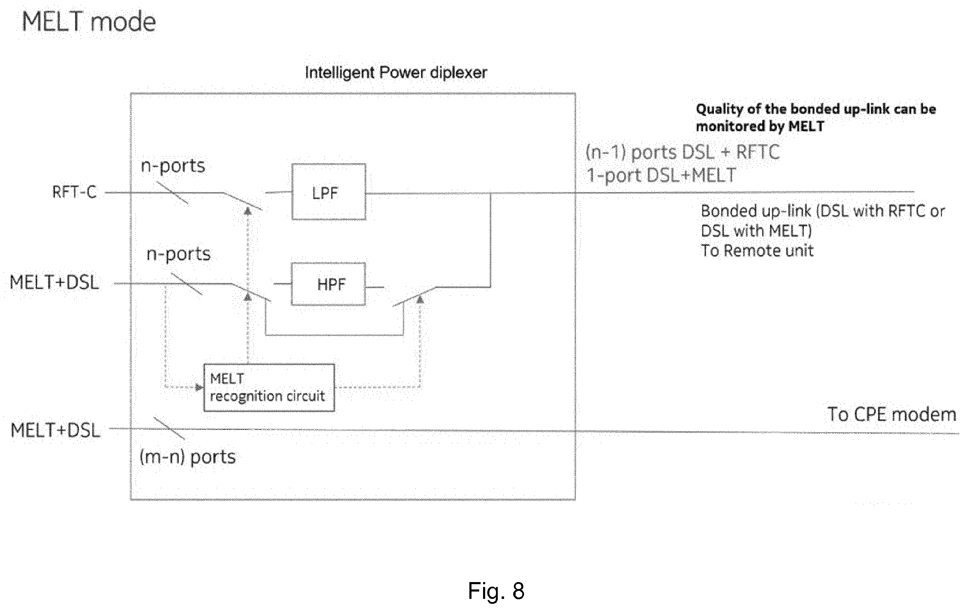

Figure 7 is a block diagram illustrating a first state (RPF mode) of an apparatus according to exemplary embodiments of the present invention, and Figure 8 is a block diagram illustrating a second state (MELT mode) of the apparatus illustrated in Figure 7.

In particular, Figures 7 and 8 illustrate a specific example of the diplexer apparatus 10 illustrated in Figure 6.

In the example shown in Figures 7 and 8, the power diplexer couples the n pairs DSL line with RFT-C/V via a network of a low pass filter (LPF as an example of the first frequency selective filter circuitry) and a high pass filter (HPF as an example of the second frequency selective filter circuitry).

While in the RPF mode shown in Figure 7 the RFT-C/V is connected to the bonded up-link via the LPF and the DSL is connected to the bonded up-link via the HPF, in the MELT mode (upon detection of MELT activity) shown in Figure 8 a switch disconnects the RFT-C/V from the LPF, and two toggle switches disconnect the HPF from the DSL (including MELT) and the bonded up-link and connect the DSL (including MELT) and the bonded up-link with a (dedicated) bypass line, thereby bypassing the HPF. Thus, while the HPF of the power diplexer would not let pass MELT signaling using baseband frequencies from DC to 4kHz, the DSL including MELT signaling is rerouted via the (dedicated) bypass line.

In other words, once MELT activity is recognized, e.g. a relay will be triggered to switch off the RFT-C/V power on the corresponding line, and subsequently (or in parallel) the bypass relays of the exemplary HPF are switched in MELT mode. In this way a metallic path is being created and the line is ready for MELT access without disturbing the DSL service.

According to still further embodiments of the present invention, a higher frequency component path voltage is input into said detection circuitry 12, and said detection circuitry 12 comprises at least one of a high impedance anti-aliasing filter configured to filter, from said input higher frequency component path voltage, frequencies equal to or smaller than a predetermined filter frequency, and to output said filtered voltage, an analog-to-digital converter configured to quantize said filtered voltage, and to output a digital signal based on said quantized filtered voltage, and a micro-controller configured to identify said metallic line testing activity based on said digital signal.

In more specific terms, according to exemplary embodiments of the present invention, the diplexer apparatus 10 is implemented with an intelligent listening circuit (which may embodied by a micro-controller e.g. being or including a micro-processor) as an example for the detection circuitry 12 or a combination of the detection circuitry and the control circuitry 13.

According to exemplary embodiments of the present invention, the MELT recognition circuit (as an example for the intelligent listening circuit and/or for the detection circuitry 12 or a combination of the detection circuitry and the control circuitry 13) may implemented as an high impedance anti-aliasing filter filtering out all frequencies below (e.g.) 30kHz followed by an analog-to-digital converter quantizing all frequencies below (e.g.) 30kHz. A micro-controller may be implemented to interpret the digital output and to switch one of the n-ports into RPF mode and back.

According to still further embodiments of the present invention, the higher frequency component path 11b may be configured to carry plain old telephone service signaling (POTS).

According to still further embodiments of the present invention, the plain old telephone service signaling (POTS) may utilize a base-band frequency equal to or smaller than 4kHz.

In particular, the POTS frequency range (POTS service) is from 200Hz to 4kHz plus DC line feeding plus 25Hz ringing. POTS utilizes voice frequencies between 4kHz and 200Hz.

According to still further embodiments of the present invention, the higher frequency component path 11b may be configured to carry digital subscriber line (DSL) signaling.

According to still further embodiments of the present invention, the digital subscriber line (DSL) signaling may utilize a DSL-band frequency equal to or larger than 32kHz. Preferably, the digital subscriber line (DSL) signaling may utilize a DSL-band frequency equal to or larger than 32kHz and lower than 212MHz.

According to still further embodiments of the present invention, the first frequency selective filter circuitry 11d may be configured to present a first impedance for said remote power feeding via twisted pair copper lines (RPF), and to present a second impedance for said digital subscriber line (DSL) signaling, wherein said first impedance is lower than said second impedance.

According to still further embodiments of the present invention, the first frequency selective filter circuitry 11d may be a low-pass filter circuitry. According to still further embodiments of the present invention, the second frequency selective filter circuitry 11e may be configured to present a third impedance for said remote power feeding via twisted pair copper lines (RPF), and to present a fourth impedance for said plain old telephone service (POTS signaling, wherein said third impedance is higher than said fourth impedance.

According to still further embodiments of the present invention, the second frequency selective filter circuitry 11e may be a high-pass filter circuitry.

According to still further embodiments of the present invention, metallic line testing (MELT) signaling of said metallic line testing activity may utilize a base-band frequency equal to or smaller than 4kHz.

According to still further embodiments of the present invention, the diplexer apparatus 10 may be configured to combine a plurality (e.g. n) of lower frequency component paths 11a and a corresponding plurality (e.g. n) of higher frequency component paths 11b to a corresponding plurality (e.g. n) of compound paths 11c.

Thus, according to exemplary embodiments of the present invention, a kind of time multiplexing is deployed in such a way that RPF and MELT cannot be present at the same time on the same copper pair. Consequently, RPF and MELT does not interfere each other, and can thus generally coexist.

The above-described procedures and functions may be implemented by respective functional elements, processors, or the like, as described below.

In the foregoing exemplary description of the apparatus, only the units that are relevant for understanding the principles of the invention have been described using functional blocks. The apparatus may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

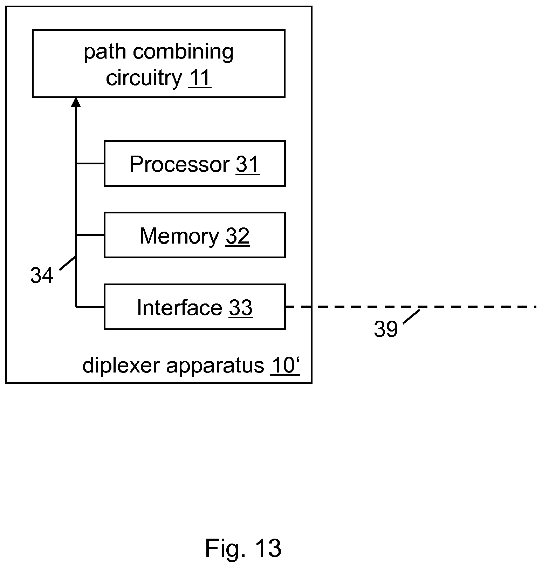

In Figure 13, an alternative illustration of apparatus according to exemplary embodiments of the present invention is depicted. As indicated in Figure 13, according to exemplary embodiments of the present invention, the apparatus 10' (corresponding to the diplexer apparatus 10) comprises a processor 31, a memory 32 and an interface 33, which are connected by a bus 34 or the like. The apparatus may be connected via link 39 e.g. to other apparatuses. the apparatus may include or be connected to the path combining circuitry discussed above.

The processor 31 and/or the interface 33 may also include a modem or the like to facilitate communication over a (hardwire or wireless) link, respectively. The interface 33 may include a suitable transceiver coupled to one or more antennas or communication means for (hardwire or wireless) communications with the linked or connected device(s), respectively. The interface 33 is generally configured to communicate with at least one other apparatus, i.e. the interface thereof.

The memory 32 may store respective programs assumed to include program instructions or computer program code that, when executed by the respective processor, enables the respective electronic device or apparatus to operate in accordance with the exemplary embodiments of the present invention.

The stored programs may be transferred to the memory 32 from a storage medium fixedly mounted detachably attached to the apparatus. The storage medium may be an Secure Digital (SD) memory card.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the diplexer apparatus 10 comprises at least one processor 31, at least one memory 32 including computer program code, and at least one interface 33 configured for communication with at least another apparatus. The processor (i.e. the at least one processor 31, with the at least one memory 32 and the computer program code) is configured to perform detecting, utilizing said detection circuitry, metallic line testing activity on said higher frequency component path (thus the apparatus comprising corresponding means for detecting), and to perform controlling, utilizing said control circuitry, if said metallic line testing activity on said higher frequency component path is detected, to electrically disconnect said lower frequency component path from said compound path, and to establish an electric connection from said higher frequency component path to said compound path bypassing said second frequency selective filter circuitry (thus the apparatus comprising corresponding means for controlling).

For further details regarding the operability/functionality of the apparatus, reference is made to the above description in connection with any one of Figures 3 to 12, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for realization of metallic line testing in scenarios utilizing remote power feeding via twisted pair copper lines. Such measures exemplarily comprise provision of a diplexer apparatus combining a lower frequency component path and a higher frequency component path to a compound path, the diplexer apparatus comprising said lower frequency component path configured to pass remote power feeding via twisted pair copper lines, said higher frequency component path, a first frequency selective filter circuitry electrically connecting said lower frequency component path to said compound path, a second frequency selective filter circuitry electrically connecting said higher frequency component path to said compound path, a detection circuitry configured to detect metallic line testing activity on said higher frequency component path, and a control circuitry configured to control, if said metallic line testing activity on said higher frequency component path is detected, electrically disconnecting said lower frequency component path from said compound path and establishing an electric connection from said higher frequency component path to said compound path bypassing said second frequency selective filter circuitry. Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

### List of acronyms and abbreviations

- CO: central office
- CPE: customer premises equipment
- DSL: digital subscriber line
- HPF: high pass filter
- LPF: low pass filter
- MELT: metallic line testing
- POTS: plain old telephone service
- PSTN: public switched telephone network
- RPF: remote power feeding via twisted pair copper lines
- RFT-C: remote feeding telecommunication - current
- RFT-V: remote feeding telecommunication - voltage
- SEM: sealed expansion module

## Claims

1. A diplexer apparatus combining a lower frequency component path and a higher frequency component path to a compound path, the diplexer apparatus comprising
said lower frequency component path configured to pass remote power feeding via twisted pair copper lines,
said higher frequency component path,
a first frequency selective filter circuitry electrically connecting said lower frequency component path to said compound path,
a second frequency selective filter circuitry electrically connecting said higher frequency component path to said compound path,
a detection circuitry configured to detect metallic line testing activity on said higher frequency component path, and
a control circuitry configured to control, if said metallic line testing activity on said higher frequency component path is detected, electrically disconnecting said lower frequency component path from said compound path and establishing an electric connection from said higher frequency component path to said compound path bypassing said second frequency selective filter circuitry.

2. The diplexer apparatus according to claim 1, further comprising
a lower frequency component path switch arranged between said lower frequency component path and said first frequency selective filter circuitry and configured to, in a first switch state, electrically connect said lower frequency component path and said first frequency selective filter circuitry, wherein
said control circuitry is configured to control, if said metallic line testing activity on said higher frequency component path is detected, switching said lower frequency component path switch into a second switch state electrically disconnecting said lower frequency component path from said compound path.

3. The diplexer apparatus according to claim 2, wherein
said lower frequency component path switch is a toggle switch, and
said lower frequency component path switch is configured to, in said second switch state, electrically connect said higher frequency component path and said first frequency selective filter circuitry.

4. The diplexer apparatus according to claim 1, further comprising
a lower frequency component path switch arranged between said first frequency selective filter circuitry and said compound path and configured to, in a first switch state, electrically connect said first frequency selective filter circuitry and said compound path, wherein
said control circuitry is configured to control, if said metallic line testing activity on said higher frequency component path is detected, switching said lower frequency component path switch into a second switch state electrically disconnecting said first frequency selective filter circuitry from said compound path.

5. The diplexer apparatus according to claim 4, wherein
said lower frequency component path switch is a toggle switch, and
said lower frequency component path switch is configured to, in said second switch state, electrically connect said higher frequency component path and said compound path.

6. The diplexer apparatus according to any of claims 1, 2 or 4, further comprising
a bypass path,
a higher frequency component path toggle switch arranged between said higher frequency component path and said second frequency selective filter circuitry and configured to, in a first switch state, electrically connect said higher frequency component path and said second frequency selective filter circuitry, and in a second switch state, electrically connect said higher frequency component path and said bypass path, and
a frequency selective filter circuitry toggle switch arranged between said second frequency selective filter circuitry and said compound path and configured to, in a first switch state, electrically connect said second frequency selective filter circuitry and said compound path, and in a second switch state, electrically connect said bypass path and said compound path, wherein
said control circuitry is configured to control, if said metallic line testing activity on said higher frequency component path is detected, switching said higher frequency component path toggle switch into said second switch state and switching said frequency selective filter circuitry toggle switch into said second switch state.

7. The diplexer apparatus according to any of claims 1 to 6, wherein
a higher frequency component path voltage is input into said detection circuitry, and
said detection circuitry comprises at least one of
a high impedance anti-aliasing filter configured to filter, from said input higher frequency component path voltage, frequencies equal to or smaller than a predetermined filter frequency, and to output said filtered voltage,
an analog-to-digital converter configured to quantize said filtered voltage, and to output a digital signal based on said quantized filtered voltage, and
a micro-controller configured to identify said metallic line testing activity based on said digital signal.

8. The diplexer apparatus according to any of claims 1 to 7, wherein
said higher frequency component path is configured to carry plain old telephone service signaling.

9. The diplexer apparatus according to claim 8, wherein
said plain old telephone service signaling utilizes a base-band frequency equal to or smaller than 4kHz.

10. The diplexer apparatus according to any of claims 1 to 9, wherein
said higher frequency component path is configured to carry digital subscriber line signaling.

11. The diplexer apparatus according to claim 10, wherein
said digital subscriber line signaling utilizes a band frequency equal to or larger than 32kHz.

12. The diplexer apparatus according to claim 10 dependent on claim 8 or 9 or according to claim 11 dependent on claim 8 or 9, wherein
said first frequency selective filter circuitry is configured to present a first impedance for said remote power feeding via twisted pair copper lines, and to present a second impedance for said digital subscriber line signaling, wherein said first impedance is lower than said second impedance.

13. The diplexer apparatus according to claim 12, wherein
said first frequency selective filter circuitry is a low-pass filter circuitry.

14. The diplexer apparatus according to claim 12 or 13, wherein
said second frequency selective filter circuitry is configured to present a third impedance for said remote power feeding via twisted pair copper lines, and to present a fourth impedance for said plain old telephone service signaling, wherein said third impedance is higher than said fourth impedance.

15. The diplexer apparatus according to claim 14, wherein
said second frequency selective filter circuitry is a high-pass filter circuitry.

16. The diplexer apparatus according to any of claims 1 to 15, wherein
metallic line testing signaling of said metallic line testing activity utilizes a base-band frequency equal to or smaller than 4kHz.

17. The diplexer apparatus according to any of claims 1 to 16, wherein
the diplexer apparatus is configured to combine a plurality of lower frequency component paths and a corresponding plurality of higher frequency component paths to a corresponding plurality of compound paths.

18. A method of operating a diplexer apparatus combining a lower frequency component path and a higher frequency component path to a compound path, the diplexer apparatus comprising
said lower frequency component path configured to pass remote power feeding via twisted pair copper lines,
said higher frequency component path,
a first frequency selective filter circuitry electrically connecting said lower frequency component path to said compound path,
a second frequency selective filter circuitry electrically connecting said higher frequency component path to said compound path,
a detection circuitry, and
a control circuitry,
the method comprising
detecting, utilizing said detection circuitry, metallic line testing activity on said higher frequency component path, and
controlling, utilizing said control circuitry, if said metallic line testing activity on said higher frequency component path is detected, to electrically disconnect said lower frequency component path from said compound path, and to establish an electric connection from said higher frequency component path to said compound path bypassing said second frequency selective filter circuitry.

19. A computer program product for operating a diplexer apparatus combining a lower frequency component path and a higher frequency component path to a compound path, the diplexer apparatus comprising
said lower frequency component path configured to pass remote power feeding via twisted pair copper lines,
said higher frequency component path,
a first frequency selective filter circuitry electrically connecting said lower frequency component path to said compound path,
a second frequency selective filter circuitry electrically connecting said higher frequency component path to said compound path,
a detection circuitry, and
a control circuitry,
the computer program product comprising computer-executable computer program code which, when the program is run on a computer connected to said diplexer apparatus, is configured to cause the computer to carry out the steps of
detecting, utilizing said detection circuitry, metallic line testing activity on said higher frequency component path, and
controlling, utilizing said control circuitry, if said metallic line testing activity on said higher frequency component path is detected, to electrically disconnect said lower frequency component path from said compound path, and to establish an electric connection from said higher frequency component path to said compound path bypassing said second frequency selective filter circuitry.

20. The computer program product according to claim 19, wherein the computer program product comprises a computer-readable medium on which the computer-executable computer program code is stored, and/or wherein the program is directly loadable into an internal memory of the computer or a processor thereof.
